(19) Europäisches Patentamt
European Patent Office
Office européen des brevets

(11) Veröffentlichungsnummer: **0 263 280 B1**

(12) # EUROPÄISCHE PATENTSCHRIFT

(45) Veröffentlichungstag der Patentschrift: **24.07.91**

(51) Int. Cl.$^5$: **C08G 18/48**, C08G 18/00

(21) Anmeldenummer: **87112213.1**

(22) Anmeldetag: **22.08.87**

Die Akte enthält technische Angaben, die nach dem Eingang der Anmeldung eingereicht wurden und die nicht in dieser Patentschrift enthalten sind.

(54) **Verfahren zur Herstellung von elastischen, offenzelligen Polyurethan-Weichschaumstoffen mit erhöhter Stauchhärte.**

(30) Priorität: **05.09.86 DE 3630225**

(43) Veröffentlichungstag der Anmeldung:
**13.04.88 Patentblatt 88/15**

(45) Bekanntmachung des Hinweises auf die Patenterteilung:
**24.07.91 Patentblatt 91/30**

(84) Benannte Vertragsstaaten:
**AT BE CH DE ES FR GB IT LI NL SE**

(56) Entgegenhaltungen:
**EP-A- 0 132 302**
**DE-A- 3 323 872**
**FR-A- 2 211 495**
**US-A- 3 433 751**

(73) Patentinhaber: **BAYER AG**
**W-5090 Leverkusen 1 Bayerwerk(DE)**

(72) Erfinder: **Dietrich, Manfred, Dr.**
**Dresdener Strasse 16**
**W-5090 Leverkusen 1(DE)**
Erfinder: **Illger, Hans-Walter, Dr.**
**Hasenfeld 13**
**W-5064 Rösrath-Forsbach(DE)**
Erfinder: **Vogtel, Peter, Dr.**
**Edif. Argos I Calle del Sol**
**Cala Romana Tarragona(ES)**

EP 0 263 280 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Aus den Standard-Weichschaumpolyethern, die in der Regel bi- bis trifunktionell sind, deren Polyetherketten aus Ethylenoxid und Propylenoxid bzw. nur aus Propylenoxid aufgebaut sind und die endständig Propylenoxid und somit sekundäre OH-Gruppen enthalten, lassen sich durch Umsetzung mit TDI-80 (Toluylendiisocyanat mit 80 % 2,4-und 20 %, 2,6 -Isomeren) nach bekannten Verfahren Polyurethan-Weichschaumstoffe herstellen.

Zur Erhöhung der Härte dieser Schaumstoffe, die im wesentlich durch die Rohdichte (Raumgewicht) bestimmt wird, bietet sich bei Raumgewicht nur die Erhöhung der TDI-Kenzahl (stöchiometrisches Verhältnis TDI zu den übrigen Reaktionskomponenten, bei stöchiometrischer Umsetzung = 100) an. Da dies Verfahren jedoch engen Grenzen unterliegt, andererseits eine erhöhte Schaumstoffhärte eine erwünschte Eigenschaft ist, werden Schaumstoffe mit erhöhter Härte hauptsächlich nach zwei Verfahren hergestellt;

- Verschäumung aktiver Polyether, d.h. Polyether, die am Ende der Kette Ethylenoxid-Reste tragen und somit einen hohen Anteil an primären OH-Gruppen aufweisen. Bei der Verschäumung dieser Produkte ist neben TDI 80 die anteilige Mitverwendung von TDI 65 (Toluylendiisocyanat mit 65 % 2,4- und 35 % 2,6-Isomeren) notwendig, um Geschlossenzelligkeit und Schrumpf zu vermeiden. In der Verschäumungssicherheit, d.h. der Anfälligkeit gegen die üblichen Störungen bei der Schaumstoffherstellung sind aber diese Systeme grundsätzlich solchen auf Basis Standardether/TDI 80 unterlegen.
- Verschäumung von Abmischungen von Standardethern mit Füllstoffpolyolen (Polyether, die in feindisperser Phase einen organischen Füllstoff enthalten). Dieses Verfahren, das die Verschäumung mit TDI 80 ermöglicht und in der Verschäumungssicherheit mit der Verarbeitung von Standardpolyolen vergleichbar ist, weist hinsichtlich der verwendeten Abmischkomponente ökonomische Nachteile gegenüber der Verschäumung von Standardethern und in der Regel auch gegenüber der Verarbeitung von aktiven Systemen unter Mitverwendung von T 65 auf.

Alle Verfahren, die beschriebenen Nachteile zu vermeiden, indem zur Stauchhärteerhöhung kurskettige, polyfunktionelle Vernetzer in Abmischung mit Standardpolyethern eingesetzt wurden (bevorzugt solche, die auch ökonomische Vorteile bieten) haben keine Bedeutung erlangt:

- Zusatz monomerer OH-funktioneller Verbindungen (z.B. Glycerin, Trimethylolpropan, Triethanolamin) führte bereits in so geringen Mengen (< 2 Gew.-Teile) zum Schrumpf, daß sich keine Eigenschaftsverbesserungen erzielen lassen.
- Zusatz alkoxylierter Polyamine bzw. polyfunktioneller Alkohole ist zwar in mengen von bis zu 5 Gew.-Teilen möglich, beeinträchtigt jedoch signifikant die Offenzelligkeit sowie Zugfestigkeit und Bruchdehnung ohne zu nennenswerten Stauchhärteerhöhungen zu führen.
- Zusatz alkoxylierter, mehrwertiger Alkohole mit OH-Zahlen bis 120 führt zu offenzelligen Schaumstoffen, jedoch ist die Härtesteigerung gering, die Zugfestigkeit und vor allem die Bruchdehnung der resultierenden Schaumstoffe werden wegen der notwendigen hohen Zusatzmenge negativ beeinflußt.
- Aus der DE-OS 2 507 161 ist der Zusatz kristalliner, in feiner Verteilung im Polyether dispergierter mehrfacher Alkohole z.B. Sorbit bekannt. Essentiell für die Erreichung des beschriebenen Effektes der Stauchhärteerhöhung ist das Schmelzen der polyfunktionellen Alkoholkomponente während des Aufschäumvorgangs.

Wie in der GB-PS 1 396 105 beschrieben, lassen sich Propoxylierungsprodukte von mehrwertigen Alkoholen wie Trimethylolpropan Pentaerythrit im OH-Zahlbereich von ca. 175 störungsfrei in 9 Teilen mitverschäumen, es wird jedoch keine Stauchhärteerhöhung erreicht.

Nach GB-PS 1 396 105 bzw. -OS 3 323 872 erzielt man erst durch Einsatz von Additionsprodukten aus Alkylenoxiden (Ethylenoxid und/oder Propylenoxid) und monomeren, polyfunktionellen Alkoholen der Funktionalität ≧ 6 im OH-Zahlbereich zwischen 120 und 200, die mit Standardpolyethern verträglich sind und in Mengen bis zu Gew.-% in Abmischung mit Standardpolyethern nach normalen Weichschaum-Rezepturen mit Polyisocyanaten, vorzugsweise TDI 80 verschäumbar sind, Schaumstoffe mit erhöhter Stauchhärte bei guten sonstigen mechanischen Eigenschaften.

Es wurde nun überraschenderweise gefunden, daß insbesondere endständige Ethylenoxid modifizierte polyfunktionelle Alkohole der Funktionalität ≧ 6 in Mengen bis zu 25 Gew.-% in Abmischung mit Standardpolyethern nach Weichschaumrezepturen mit Polyisocanaten, vorzugsweise TDI 65 verschäumbar sind und Schaumstoffe mit wesentlich höheren Stauchhärten ergeben als die in den vorstehend genannten Literaturstellen beschrieben.

1. Gegenstand der Erfindung ist somit ein Verfahren zur Herstellung von elastischen, offenzelligen Polyurethan-Weichschaumstoffen mit wesentlich erhöhter Stauchhärte durch Umsetzung von

a) Polyisocyanaten mit

b) einem Polyolgemisch in Gegenwart von

c) Wasser und/oder organischen Treibmitteln, gegebenenfalls unter Mitverwendung von
d) Katalysatoren, Stabilisatoren sowie weiteren an sich bekannten Hilfs- und Zusatzstoffen,
dadurch gekennzeichnet,
daß als Polyolgemisch b) ein Gemisch, bestehend aus 95 bis 75 Gew.-% eines endständig OH-Gruppen aufweisenden Polyetherpolyols der Funktionalität 2-4 und einer OH-Zahl von 25-60, und 5 bis 25 Gew.-% eines mindestens hexafunktionellen Polyetherpolyols mit einer OH-Zahl von 150-200, das nach Umsetzung eines Alkohols der Funktionalität von mindestens 6 mit Propylenoxid endständig mit 5-50 Gew.-%, bevorzugt 10-30 Gew.-% (bezogen auf Gesamtalkylenoxid), Ethylenoxid modifiziert worden ist,
verwendet wird.

Erfindungsgemäß werden als Polyisocyanate bevorzugt aromatische Polyisocyanate verwendet; besonders bevorzugt Toluylendiisocyanat mit einem Gehalt von 65 Gew.-% 2,4 Isomeren und 35 Gew.-% 2,6 Isomeren (T 65).

Erfindungsgemäß als mindestens hexafunktionelle Polyether bevorzugt solche verwendet, die durch Umsetzung von Sorbit mit Propylenoxid und anschließend Ethylenoxid erhalten worden sind.

Erfindungsgemäß ist ferner bevorzugt, daß als OH-Gruppen aufweisendes Polyetherpolyol der Funktionalität 2 - 4 und einer OH-Zahl von 25 - 60 ein füllstoffhaltiges Polyetherpolyol eingesetzt wird.

Erfindungsgemäß ist schließlich bevorzugt, daß als OH-Gruppen aufweisendes Polyetherpolyol der Funktionalität 2 - 4 und einer OH-Zahl von 25 - 60 ein sekundäres OH-Gruppen aufweisendes Polyetherpolyol eingesetzt wird.

Für die Durchführung des erfindungsgemäßen Verfahrens werden als Polyisocyanate eingesetzt:

1. Aliphatische, cycloaliphatische, araliphatische, aromatische und heterocyclische Polyisocyanate, wie sie z.B. W. Siefken in Justus Liebigs Annalen der Chemie, 562, Seiten 75 bis 136 beschrieben werden, beispielsweise solche der Formel

$$Q(NCO)_n$$

in der

n = 2-4, vorzugsweise 2,

und

| | |
|---|---|
| Q | einen aliphatischen Kohlenwasserstoffrest mit 2-18, vorzugsweise 6-10 C-Atomen, |
| einen | cycloaliphatischen Kohlenwasserstoffrest mit 4-15, vorzugsweise 5-10 C-Atomen, |
| einen | aromatischen Kohlenwasserstoffrest mit 6-15, vorzugsweise 6-13 C-Atomen, |
| oder einen | araliphatischen Kohlenwasserstoffrest mit 8-15, vorzugsweise 8-13 C-Atomen, |

bedeuten z.B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5 -isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder 1,4-phenylendiisocyanat, Perhydro-2,4' -und/oder 1,4-Phenylendiisocyanat, 2,4- und 2,6-Toluylendiisocyanat sowie beliebige Gemische dieser Isomeren, Diphenylmethan-2,4' - und/oder -4,4'-diisocyanat, Naphthylen-1,5-diisocyanat.

Ferner kommen beispielsweise erfindungsgemäß in Frage:
Tripenylmethan-4,4',4''-triisocyanat, Polyphenyl-polymethylen-polyisocyanate, wie sie durch Anilin-Formaldehyd-Kondensation und anschließende Phosgenierung erhalten und z.B. in den GB-Patentschriften 874 430 und 348 671 beschrieben werden, m- und p-Isocyanatophenyl-sulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890. der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende

Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren vorgenannten Polyisocyanate, einzusetzen. Ferner ist es möglich, beliebige Mischungen der vorgenannten Polyisocyanate zu verwenden. Aromatische Polyisocyanate sind bevorzugt.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylen-polyisocyante, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyante ("modifizierte Polyisocyanate"), insbesondere solche modifizierte Polyisocyanate, die sich vom 2,4- und/oder 2,6-Toluylendiisocyanat bzw. vom 4,4'- und/oder 2,4' -Diphenylmethandiisocyanat ableiten.

Ganz besonders bevorzugtes Polyisocyanat ist, wie bereits erwähnt, Toluylendiisocyanat mit einem Gehalt von 65 Gew.-% an 2,4- und 35 Gew.-% an 2,6-Isomeren (TDI 65)

Als Polyolkomponente wird eine Polyetherpolyolgemisch eingesetzt, das zu 95 bis 75 Few.-% aus einem Polyetherpolyol der Funktionalität 2-4 im OH-Zahl-Bereich 25 bis 60 besteht. Diese zwei bi s vier, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid (bevorzugt), Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide gegebenenfalls im Gemisch oder nacheinander, vorzugsweise von Propylenoxid, gegebenenfalls unter Mitverwendung von geringen Mengen an Startkomponenten mit reaktionsfähigen Wasserstoffatomen wie Wasser, Alkohol, Ammoniak oder Amine, z.B. Ethylenglykol, Propylenglykol-(1,3) oder -(1,2), Trimethylolpropan, Glycerin, 4,4'-Dihydroxy-diphenylpropan, Anilin, Ethanolamin oder Ethylendiamin hergestellt. Als Startkomponenten sind Trimethylolpropan und/oder Gylcerin bevorzugt.

Erfindungsgemäß sind solche Polyether bevorzugt, die ausschließlich oder weit überwiegend (über 90 Gew.-%, bezogen auf alle vorhandenen OH-Gruppen im Polyether) sekundäre OH-Gruppen aufweisen. Diese Polyether umfassen die sogenannten Standard-Weichschaumpolyether. Bevorzugt sind ferner auch solche derartigen Polyether, die füllstoffhaltig sind (vergl. hierzu z. B. DE-OS 2 423 984, DE-OS 2 513 815, DE-OS 2 519 004, DE-OS 2 550 796, DE-OS 2 550 797, DE-OS 2 255 860, DE-OS 2 639 254, DE-PS 1 168 075, DE-PS 1 260 142).

Die andere Komponente des Polyolgemisches, die in diesem von 5 bis 25 % enthalten ist, ist ein mindestens hexafunktionelles Polyetherpolyol vom OH-Zahlbereich 150-200, welches ein Additionsprodukt aus polyfunktionellen Alkoholen mit 6 oder mehr OH-Gruppen, vorzugsweise 6 bis 8 OH-Gruppen, wie Sorbit (bevorzugt) oder Sucrose und Propylenoxid darstellt, das mit 5-50 Gew.-%, bevorzugt 10-30 Gew.-%, Ethylenoxid (bezogen auf Gesamtalkylenoxid), endständig modifiziert ist. Bevorzugt sind Alkoxylierungsprodukte von Sorbit mit der OH-Zahl von etwa 175.

Als Treibmittel werden eingesetzt:

Wasser und/oder leicht flüchtige anorganische oder organische Substanzen. Als organische Treibmittel kommen z.B. Aceton, Ethylacetat, halogensubstituierte Alkane wie Methylenchlorid, Chloroform, Ethylidenchlorid, Vinylidenchlorid, Monofluotrichlormethan, Chlordifluormethan, Dichlorfluormethan, ferner Butan, Hexan, Heptan oder Diethylether, als anorganische Treibmittel (z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.

Weitere Beispiele für Treibmittel sowie Einzelheiten über die Verwendung von Treibmitteln sind im Kunststoff-Handbuch Band VII, herausgegeben von Vieweg und Höchtlen, Carl-Hanser-Verlag, München 1966, z.B. auf den Seiten 108 und 109, 453 bis 455 und 507 bis 510 beschrieben.

Als Katalysatoren, Stabilisatoren und weitere Zusatzstoffe werden gegebenenfalls mitverwendet:

Katalysatoren der an sich bekannten Art, z.B. tertiäre Amine, wie Triethylamin, N-Methyl-morpholin, N-Ethylmorpholin, N,N,N',N'-Tetramethylethylendiamin, Pentamethyl-diethylentriamin und höhere Homologe (DE-Offenlegungsschriften 2 624 527 und 2 624 528), 1,4-Diazabicyclo-(2,2,2)-octan, N-Methyl-N'-dimethylami-

noethylpiperazin, bis-(dimethylaminoalkyl)-piperazine (DE-Offenlegungsschrift 2 636 787), N,N'-Dimethylbenzylamin, N,N-Dimethylcyclohexylamin, N,N-Diethylbenzylamin, Bis-(N,N-diethylaminoethyl)-adipat, N ,N,N',N'-Tetramethyl-1,3-butandiamin, N,N-Dimethylphenylethylamin, 1,2-Dimethylimidazol, 2-Methylimidazol, monocyclische und bicyclische Amidine (DE-Offenlegungsschrift 1 720 633). Bis-(dialkylamino)alkylether (US-Patentschrift 3 330 782, DE-Auslegeschrift 1 030 558, DE-Offenlegungsschriften 1 804 361 und 2 618 280) sowie Amidgruppen (vorzugweise Formamidgruppen) aufweisende tertiäre Amine gemäß DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind.z.B. Triethanolamn, Triisopropanolamn, N-Methyl-diethanolamin, N-Ethyl-diethanolamin, N,N-Dimethylethanolamin, deren Umsetzungsprodukte mit Alkylenoxiden wie Propylenoxid und/oder Ethylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diethylaminoethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatome wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zn(II)salze von Carbonsäure wie Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Polyethern mit mindestens zwei Hydroxylgruppen eingesetzt. Als Emulgatoren kommen z.B. die Natriumsalze von Ricinusöl-sufonaten oder Salze von Fettsäuren mit Aminen wie ölsaures Diethylamin oder stearinsaures Diethanolamin infrage. Auch Alkali- oder Ammoniumsalze von Sulfonsäuren wie etwa Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 2 558 523.

Gegebenenfalls werden Reaktionsverzögerer, z.B. sauer reagierende Stoffe wie Salzsäure oder organische Säurehalogenide mitverwendet, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B.

Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögeren, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs-und Wirkungsweise dieser Zusatzmittel sind im Kunstoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahren:
Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Im allgemeinen wird dabei bei Kennzahlen von 95-120 gearbeitet. Einzelheiten über Verarbeitungseinrichtungen, die auch erfindungsgemäß infrage kommen, werden im Kunstoff-Handbuch, Carl-Hanser-Verlag, München 1966, z.B. auf den Seiten 121 bis 205 beschrieben.

Selbstverständlich können aber auch Schaumstoffe durch Blockverschäumung oder nach dem an sich bekannten Doppeltransportbandverfahren hergestellt werden.

Vorzugsweise werden die erfindungsgemäß erhaltenen Schaumstoffe zur Herstellung von Matratzen und Polstermaterialien verwendet.

Die folgenden Beispiele erläutern das erfindungsgemäße Verfahren:
Tabelle 1 gibt eine kurze Charakteristik der eingesetzten Vernetzertypen.

Tabelle 2 mit den Beispiele 1-6 zeigt den überaschenden Effekt der bedeutenden Stauchhärteerhöhung bei Verwendung der erfindungsgemäßen Polyolmischung. Aus den Vergleichsbeispielen 7-15 ist ersichtlich, daß

- eine Verminderung des Gehaltes an primären OH-Gruppen bei den verwandten kurzkettigen Polyethern zu einer Stauchhärteerniedrigung führt (Vergleichbeispiele 9-12).
- eine Reduzierung der Funktionalität des Starters bei sonst vergleichbarem Gehalt an primären OH-Gruppen ebenfalls in einer Stauchhärteminderung resultiert (Vergleichsbeispiele 13-15).
- eine Verringerung der OH-Zahl (Vergleichsbeispiel 7) eine Stauchhärteerniedrigung, eine Erhöhung der OH-Zahl (Vergleichsbeispiel 8) zwar eine Stauchhärteerhöhung aber inakzeptable sonstige mechanische Eigenschaften mit sich bringt.

Tabelle 3 belegt, daß eine Mengensteigerung des Vernetzers in der Polyolabmischung zu einer Stauchhärteerhöhung führt, daß allerdings die übrigen Schaumeigenschaften wie Zugfestigkeit und Bruchdehnung (sowie die in der Tabelle angegebenen Elastizitätswerte) nicht tolerierbare Werte annehmen.

**Tabelle 1**

E I N G E S E T Z T E   V E R N E T Z E R T Y P E N

| Produkt-Nr. | Starter | Gew.-% Ethylenoxid endständig* | Prozengehalt primäre OH-Gruppen | OH-Zahl | Gew.-% Ethylenoxid im Mischblock |
|---|---|---|---|---|---|
| 1 | Sorbit | 5 | 20 | 175 | |
| 2 | " | 10 | 31 | " | |
| 3 | " | 15 | 40 | " | |
| 4 | " | 20 | 45 | " | |
| 5 | " | 30 | 56 | " | |
| 6 | " | 50 | 68 | " | |
| 7 | " | 20 | 56 | 125 | |
| 8 | " | 20 | 43 | 250 | |
| 9 | " | | 4 | 175 | 10 |
| 10 | " | | 8 | " | 30 |
| 11 | " | | 25 | " | 50 |
| 12 | " | 0 | $<3$ | " | |
| 13 | Trimethylolpropan | 10 | 33 | " | |
| 14 | " | 20 | 45 | " | |
| 15 | " | 30 | 56 | " | |

* bezogen auf Gesamtepoxid

**Tabelle 2** VERSCHÄUMUNGSBEISPIELE

| Beispiel (entsprechend Produkt-Nr. Tabelle 1) | 1 | 2 | 3 | |
|---|---|---|---|---|
| handelsübliches Standard-Polyetherpolyol der OH-Zahl 45 mit sek. OH-Gruppen (Desmophen® 7135, Bayer AG) | 85 | 85 | 85 | Gew.-Teile |
| Produkt, entsprechend Tabelle 1, 1-15 | 15 | 15 | 15 | Gew.-Teile |
| Wasser | 4,6 | 4,6 | 4,6 | Gew.-Teile |
| handelsüblicher Weichschaumstabilisator (Polyalkylenglykol-Polysiloxan-Block-Copolymeres) | 1,1 | 1,1 | 1,1 | Gew.-Teile |
| TDI (Toluylendiisocyanat, Gemisch aus 2,4- und 2,6-Diisocyanatotoluol im Verhältnis 65:35) | 62,7 | 62,7 | 62,7 | Gew.-Teile |
| NCO-Index | 112 | 112 | 112 | |
| handelsüblicher Aminaktivator (Desmorapid® PS 207, Bayer AG) | 0,15 | 0,15 | 0,15 | Gew.-Teile |
| Zinn(II)-octoat | 0,35 | 0,35 | 0,35 | Gew.-Teile |
| Rohdichte | 23 | 22 | 23 | $kg/m^{-3}$ |
| Zugfestigkeit | 140 | 110 | 110 | kPa |
| Bruchdehnung | 70 | 70 | 70 | % |
| Stauchhärte | 6,0 | 6,2 | 6,5 | kPa |
| Druckverformungsrest bei 90 % Verformung | 30 | 20 | 15 | % |

**Tabelle 2** (Fortsetzung)

| Beispiel | 4 | 5 | 6 | |
|---|---|---|---|---|
| handelsübliches Standard-Polyether-polyol der OH-Zahl 45 mit sek. OH-Gruppen (Desmophen® 7135, Bayer AG) | 85 | 85 | 85 | Gew.-Teile |
| Produkt, entsprechend Tabelle 1, 1-15 | 15 | 15 | 15 | Gew.-Teile |
| Wasser | 4,6 | 4,6 | 4,6 | Gew.-Teile |
| handelsüblicher Weichschaumstabilisator (Polyalkylenglykol-Polysiloxan-Block-Copolymeres) | 1,1 | 1,1 | 1,1 | Gew.-Teile |
| TDI (Toluylendiisocyanat, Gemisch aus 2,4- und 2,6-Diisocyanatotoluol im Verhältnis 65:35) | 62,7 | 62,7 | 62,7 | Gew.-Teile |
| NCO-Index | 112 | 112 | 112 | |
| handelsüblicher Aminaktivator (Desmorapid® PS 207, Bayer AG) | 0,15 | 0,15 | 0,15 | Gew.-Teile |
| Zinn(II)-octoat | 0,35 | 0,24 | 0,24 | Gew.-Teile |
| Rohdichte | 23 | 23 | 23 | $kg/m^{-3}$ |
| Zugfestigkeit | 110 | 90 | 100 | kPa |
| Bruchdehnung | 60 | 70 | 75 | % |
| Stauchhärte | 6,9 | 6,6 | 6,9 | kPa |
| Druckverformungsrest bei 90 % Verformung | 30 | 30 | 45 | % |

<u>Tabelle 2</u> (Fortsetzung)

| Vergleichsbeispiel | 7 | 8 | 9 | |
|---|---|---|---|---|
| handelsübliches Standard-Polyether-polyol der OH-Zahl 45 mit sek. OH-Gruppen (Desmophen® 7135, Bayer AG) | 85 | 85 | 85 | Gew.-Teile |
| Produkt, entsprechend Tabelle 1, 1-15 | 15 | 15 | 15 | Gew.-Teile |
| Wasser | 4,6 | 4,6 | 4,6 | Gew.-Teile |
| handelsüblicher Weichschaumstabilisator (Polyalkylenglykol-Polysiloxan-Block-Copolymeres) | 1,1 | 1,1 | 1,1 | Gew.-Teile |
| TDI (Toluylendiisocyanat, Gemisch aus 2,4- und 2,6-Diisocyanatotoluol im Verhältnis 65:35) | 61,4 | 64,6 | 62,7 | Gew.-Teile |
| NCO-Index | 112 | 112 | 112 | |
| handelsüblicher Aminaktivator (Desmorapid® PS 207, Bayer AG) | 0,15 | 0,15 | 0,15 | Gew.-Teile |
| Zinn(II)-octoat | 0,32 | 0,18 | 0,30 | Gew.-Teile |
| Rohdichte | 23 | 23 | 23 | $kg/m^{-3}$ |
| Zugfestigkeit | 90 | 130 | 90 | kPa |
| Bruchdehnung | 70 | 40 | 70 | % |
| Stauchhärte | 5,7 | 7,3 | 5,5 | kPa |
| Druckverformungsrest bei 90 % Verformung | 13 | 60 | 60 | % |

**Tabelle 2** (Fortsetzung)

| Vergleichsbeispiel | 10 | 11 | 12 | |
|---|---|---|---|---|
| handelsübliches Standard-Polyetherpolyol der OH-Zahl 45 mit sek. OH-Gruppen (Desmophen® 7135, Bayer AG) | 85 | 85 | 85 | Gew.-Teile |
| Produkt, entsprechend Tabelle 1, 1-15 | 15 | 15 | 15 | Gew.-Teile |
| Wasser | 4,6 | 4,6 | 4,6 | Gew.-Teile |
| handelsüblicher Weichschaumstabilisator (Polyalkylenglykol-Polysiloxan-Block-Copolymeres) | 1,1 | 1,1 | 1,1 | Gew.-Teile |
| TDI (Toluylendiisocyanat, Gemisch aus 2,4- und 2,6-Diisocyanatotoluol im Verhältnis 65:35) | 62,7 | 62,7 | 62,7 | Gew.-Teile |
| NCO-Index | 112 | 112 | 112 | |
| handelsüblicher Aminaktivator (Desmorapid® PS 207, Bayer AG) | 0,15 | 0,15 | 0,15 | Gew.-Teile |
| Zinn(II)-octoat | 0,27 | 0,25 | 0,20 | Gew.-Teile |
| Rohdichte | 22 | 23 | 23 | $kg/m^{-3}$ |
| Zugfestigkeit | 90 | 85 | 80 | kPa |
| Bruchdehnung | 75 | 70 | 70 | % |
| Stauchhärte | 5,6 | 5,9 | 5,3 | kPa |
| Druckverformungsrest bei 90 % Verformung | 50 | 40 | 50 | % |

Tabelle 2 (Fortsetzung)

| Vergleichsbeispiel | 13 | 14 | 15 | |
|---|---|---|---|---|
| handelsübliches Standard-Polyetherpolyol der OH-Zahl 45 mit sek. OH-Gruppen (Desmophen® 7135, Bayer AG) | 85 | 85 | 85 | Gew.-Teile |
| Produkt, entsprechend Tabelle 1, 1-15 | 15 | 15 | 15 | Gew.-Teile |
| Wasser | 4,6 | 4,6 | 4,6 | Gew.-Teile |
| handelsüblicher Weichschaumstabilisator (Polyalkylenglykol-Polysiloxan-Block-Copolymeres) | 1,1 | 1,1 | 1,1 | Gew.-Teile |
| TDI (Toluylendiisocyanat, Gemisch aus 2,4- und 2,6-Diisocyanatotoluol im Verhältnis 65:35) | 62,7 | 62,7 | 62,7 | Gew.-Teile |
| NCO-Index | 112 | 112 | 112 | |
| handelsüblicher Aminaktivator (Desmorapid® PS 207, Bayer AG) | 0,15 | 0,15 | 0,15 | Gew.-Teile |
| Zinn(II)-octoat | 0,4 | 0,32 | 0,3 | Gew.-Teile |
| Rohdichte | 23 | 23 | 23 | $kg/m^{-3}$ |
| Zugfestigkeit | 110 | 90 | 90 | kPa |
| Bruchdehnung | 85 | 65 | 70 | % |
| Stauchhärte | 5,7 | 5,6 | 5,6 | kPa |
| Druckverformungsrest bei 90 % Verformung | 13 | 19 | 11 | % |

**Tabelle 3**

UNTERSCHIEDLICHE ABMISCHUNGSVERHÄLTNISSE STANDARDPOLYETHER / VERNETZER

| | | | | |
|---|---|---|---|---|
| handelsübliches Standard-Polyether-polyol der OH-Zahl 45 mit sek. OH-Gruppen (Desmophen® 7135, Bayer AG) | 91 | 85 | 80 | Gew.-Teile |
| Produkt 3 entsprechend Tabelle 1 | 9 | 15 | 20 | Gew.-Teile |
| Wasser | 2,5 | 2,5 | 2,5 | Gew.-Teile |
| handelsüblicher Weichschaumstabilisator (Polyalkylenglykol-Polysiloxan-Block-Copolymeres) | 0,4 | 0,4 | 0,4 | Gew.-Teile |
| TDI (Toluylendiisocyanat, Gemisch aus 2,4- und 2,6-Diisocyanatotoluol im Verhältnis 65:35) | 37,2 | 39,2 | 40,3 | Gew.-Teile |
| NCO-Index | 112 | 112 | 112 | |
| handelsüblicher Aminaktivator (Desmorapid® PS 207, Bayer AG) | 0,12 | 0,12 | 0,12 | Gew.-Teile |
| handelsüblicher Aminaktivator (Dimethylethanolamin) | 0,2 | 0,2 | 0,2 | Gew.-Teile |
| Zinn(II)-octoat | 0,20 | 0,25 | 0,25 | Gew.-Teile |
| Rohdichte | 42 | 42 | 42 | $kg/m^{-3}$ |
| Zugfestigkeit | 160 | 180 | 125 | kPa |
| Bruchdehnung | 155 | 145 | 60 | % |
| Stauchhärte | 8,0 | 8,8 | 9,6 | kPa |

**Tabelle 4** Füllstoffhaltiges Polyol mit primären OH-Gruppen

| | Vergleich | | Vergleich | | |
|---|---|---|---|---|---|
| Handelsübliches Polyol mit prim. OH-Gr. (Desmophen® 7652, Bayer AG) OH-Zahl 32 | 100 | 90 | 100 | 90 | Gew.-Tle |
| Produkt 4 entsprechend Tab. 1 | - | 10 | - | 10 | " |
| Wasser | 2,75 | 2,75 | 2,75 | 2,75 | " |
| Handelsüblicher Weichschaumstabilisator | 0,8 | 0,8 | - | - | " |
| Handelsüblicher HR-Stabilisator (KS53, Bayer) | - | - | 0,15 | 0,15 | " |
| T 80 | 18,3 | 19,5 | 40,6 | 42,1 | " |
| T 65 | 18,3 | 19,5 | - | - | " |
| NCO-Index | 105 | 105 | 105 | 105 | " |
| Aminaktivator PS 207 (Bayer AG) | 0,15 | 0,15 | - | - | " |
| Aminaktivator Dimethylethanolamin | 0,15 | 0,15 | - | - | " |
| Aminaktivator Dabco® 33LV | - | - | 0,12 | 0,12 | " |
| Diethanolamin | - | - | 1,3 | 1,0 | " |
| Zinn(II)octoat | 0,15 | 0,14 | 0,1 | 0,1 | " |
| Rohdichte | 38 | 38 | 33 | 33 | $kg/m^3$ |
| Stauchhärte | 6,5 | 7,7 | 4,0 | 5,5 | KPa |

## Patentansprüche

1. Verfahren zur Herstellung von elastischen, offenzelligen Polyurethan-Weichschaumstoffen durch Umsetzung von

a) Polyisocyanaten mit
b) einem Polyolgemisch in Gegenwart von
c) Wasser und/oder organischen Treibmitteln, gegebenenfalls unter Mitverwendung von
d) Katalysatoren, Stabilisatoren sowie weiteren an sich bekannten Hilfs- und Zusatzstoffen,
dadurch gekennzeichnet, daß

als Polyolgemisch b) ein Gemisch, bestehend aus 95 bis 75 Gew,-% eines endständig OH-Gruppen aufweisenden Polyetherpolyols der Funktionalität 2 - 4 und einer OH-Zahl von 25 - 60, und 5 bis 25 Gew,-% eines mindestens hexa-funktionellen Polyetherpolyols mit einer OH-Zahl von 150 - 200, das nach Umsetzung eines Alkohols einer Funktionalität von mindestens 6 mit Propylenoxid endständig mit 5 - 50 Gew.-%, bevorzugt 10 - 30 Gew.-%, Ethylenoxid (bezogen auf Gesamtalkylenoxid), modifiziert worden ist,

verwendet wird.

2. Verfahren gemäß Anspruch 1, dadurch gekennzeichnet, daß als OH-Gruppen aufweisendes Polyetherpolyol der Funktionalität 2 - 4 und einer OH-Zahl von 25 - 60 ein füllstoffhaltiges Polyetherpolyol eingesetzt wird.

3. Verfahren gemäß Anspruch 1, dadurch gekennzeichnet, daß als OH-Gruppen aufweisendes Polyetherpolyol der Funktionalität 2 - 4 und einer OH-Zahl von 25 - 60 ein sekundäres OH-Gruppen aufweisendes Polyetherpolyol eingesetzt wird.

4. Verfahren gemäß Anspruch 1 bis 3, dadurch gekennzeichnet, daß als Polyisocyanate aromatische Polyisocyanate verwendet werden.

5. Verfahren gemäß Anspruch 1 bis 4, dadurch gekennzeichnet, daß als aromatisches Polyisocyanat bevorzugt Toluylendiisocyanat mit einem Gehalt von 65 Gew.-% 2,4-Isomeren und 35 Gew.-% 2,6-Isomeren verwendet wird.

6. Verfahren gemäß Ansprüchen 1 bis 5, dadurch gekennziechnet, daß als mindestens hexafunktionelle Polyether solche verwendet werden, die nach der Umsetzung von Sorbit mit Propylenoxid endständig mit 5 - 50 Gew.-%, bevorzugt 10 - 30 Gew.-%, Ethylenoxid (bezogen auf Gesamtalkylenoxid), modifiziert worden sind.

7. Verwendung der gemäß Ansprüchen 1 bis 6 erhaltenen Schaumstoffe zur Herstellung von Matratzen und Polstermaterialien.

**Claims**

1. A process for the production of elastic, open-cell flexible polyurethane foams by reaction of
a) polyisocyanates with
b) a polyol mixture in the presence of
c) water and/or organic blowing agents, optionally using
d) catalysts, stabilizers and other auxiliaries and additives known per se,
characterized in that
the polyol mixture b) used is a mixture of 95 to 75% by weight of an OH-terminated polyether polyol having a functionality of 2 to 4 and an OH number of 25 to 60 and of 5 to 25% by weight of an at least hexafunctional polyether polyol having an OH number of 150 to 200, which after reaction of an at least hexafunctional alcohol with propylene oxide has been terminally modified with 5 to 50% by weight and preferably with 10 to 30% by weight (based on total alkylene oxide) of ethylene oxide.

2. A process as claimed in claim 1, characterized in that a filler-containing polyether polyol is used as the OH-terminated polyether polyol having a functionality of 2 to 4 and an OH value of 25 to 60.

3. A process as claimed in claim 1, characterized in that a polyether polyol terminated by secondary OH groups is used as the OH-terminated polyether polyol having a functionality of 2 to 4 and an OH value of 25 to 60.

4. A process as claimed in claims 1 to 3, characterized in that aromatic polyisocyanates are used as the polyisocyanates.

5. A process as claimed in claims 1 to 4, characterized in that tolylene diisocyanate containing 65% by weight 2,4-isomer and 35% by weight 2,6-isomer is used as the aromatic polyisocyanate.

6. A process as claimed in claims 1 to 5, characterized in that polyethers which, after the reaction of sorbitol with propylene oxide, have been terminally modified with 5 to 50% by weight and preferably with 10 to 30% by weight ethylene oxide (based on total alkylene oxide) are used as the at least hexafunctional polyethers.

7. The use of the foams obtained by the process claimed in claims 1 to 6 for the production of mattresses and upholstery materials.

## Revendications

1. Procédé pour fabriquer des mousses souples de polyuréthanne élastiques, à cellules ouvertes, en faisant réagir:
   a) des polyisocyanates avec
   b) un mélange de polyols en présence
   c) d'eau et/ou d'agents moussants organiques, éventuellement en utilisant également
   d) des catalyseurs, des stabilisateurs ainsi que d'autres adjuvants et additifs connus en soi,

   caractérisé en ce que l'on utilise comme mélange de polyols b) un mélange composé de 95 à 75% en poids d'un polyétherpolyol présentant des groupes OH en bout de chaîne, ayant une fonctionnalité de 2 à 4 et un indice d'OH de 25 à 60, et 5 à 25% d'un polyétherpolyol au moins hexafonctionnel avec un indice d'OH de 150 à 200, qui, après réaction d'un alcool d'une fonctionnalité d'au moins 6 avec de l'oxyde de propylène, a été modifié en bout de chaîne avec 5 à 50% en poids, de préférence 10 à 30% en poids (par rapport à la totalité de l'oxyde d'alkylène) d'oxyde d'éthylène.

2. Procédé selon la revendication 1, caractérisé en ce que l'on utilise comme polyétherpolyol présentant des groupes OH et ayant une fonctionnalité de 2 à 4 et un indice d'OH de 25 à 50 un polyétherpolyol contenant une charge.

3. Procédé selon la revendication 1, caractérisé en ce que l'on utilise comme polyétherpolyol présentant des groupes OH et ayant une fonctionnalité de 2 à 4 et un indice d'OH de 25 à 50 un polyétherpolyol contenant des groupes OH secondaires.

4. Procédé selon les revendications 1 à 3, caractérisé en ce que l'on utilise comme polyisocyanates des polyisocyanates aromatiques.

5. Procédé selon les revendications 1 à 4, caractérisé en ce qu'on utilise comme polyisocyanate aromatique du toluylènediisocyanate avec une teneur de 65% en poids d'isomères 2,4 et 35% en poids d'isomères 2,6.

6. Procédé selon les revendications 1 à 5, caractérisé en ce qu'on utilise comme polyéther au moins hexafonctionnel des polyéthers qui, après réaction de sorbitol avec de l'oxyde de propylène, ont été modifiés en bout de chaîne avec 5 à 50%, de préférence 10 à 30% en poids d'oxyde d'éthylène (par rapport à la quantité totale d'oxyde d'alkylène).

7. Utilisation des mousses obtenues selon les revendications 1 à 6 pour la fabrication de matelas et de matériaux de rembourrage.